(19) Europäisches Patentamt
European Patent Office
Office européen des brevets

(11) **EP 2 946 877 B1**

(12) **EUROPEAN PATENT SPECIFICATION**

(45) Date of publication and mention of the grant of the patent:
**25.12.2019 Bulletin 2019/52**

(21) Application number: **14741169.8**

(22) Date of filing: **10.01.2014**

(51) Int Cl.:
*G01B 5/30* $^{(2006.01)}$    *B23Q 15/18* $^{(2006.01)}$
*G05B 19/401* $^{(2006.01)}$    *B23Q 15/22* $^{(2006.01)}$
*G05B 19/404* $^{(2006.01)}$

(86) International application number:
**PCT/KR2014/000307**

(87) International publication number:
**WO 2014/112752 (24.07.2014 Gazette 2014/30)**

(54) **TRANSFER SYSTEM THERMAL DISPLACEMENT COMPENSATING DEVICE AND COMPENSATING METHOD FOR MACHINE TOOLS**

VORRICHTUNG UND VERFAHREN ZUM AUSGLEICHEN DER WÄRMEVERSCHIEBUNG EINES TRANSFERSYSTEMS FÜR WERKZEUGMASCHINEN

DISPOSITIF DE COMPENSATION DE DÉPLACEMENT THERMIQUE DE SYSTÈME DE TRANSFERT ET PROCÉDÉ DE COMPENSATION POUR MACHINES-OUTILS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2013 KR 20130005821**

(43) Date of publication of application:
**25.11.2015 Bulletin 2015/48**

(73) Proprietor: **Doosan Machine Tools Co., Ltd.**
**Chang-won-si, Gyeongsangnam-do 51537 (KR)**

(72) Inventors:
• **GIM, Tae Weon**
**Changwon-si**
**Gyeongsangnam-do 641-777 (KR)**

• **PARK, Se Hoon**
**Changwon-si**
**Gyeongsangnam-do 645-752 (KR)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
JP-A- H02 294 803    JP-A- 2006 116 663
KR-A- 970 005 523    KR-A- 20120 044 638
KR-A- 20120 069 056    US-A- 4 853 867
US-A1- 2012 123 586

EP 2 946 877 B1

## Description

The present invention relates to a device and method for compensating thermal displacement of feed axis system of a machine tool.

US 2012/123586 A1 discloses a method for compensating thermal displacement of a feed axis system of a machine tool, wherein an average feed speed is computed for each section of the feed's stroke and is then used to compensate the thermal displacement.

US 4 853 867 A discloses simultaneous four-axis lathe machining time bar-graph display method. Particular it is known from this document to measure specifically record transverse times in machine tools for the purpose of eliminating wasted time.

## [Background Art]

Various kinds of machine tool, such as a turning center, a machining center, and a boring machine have been widely used in various industrial sites in accordance with a use of a corresponding operation.

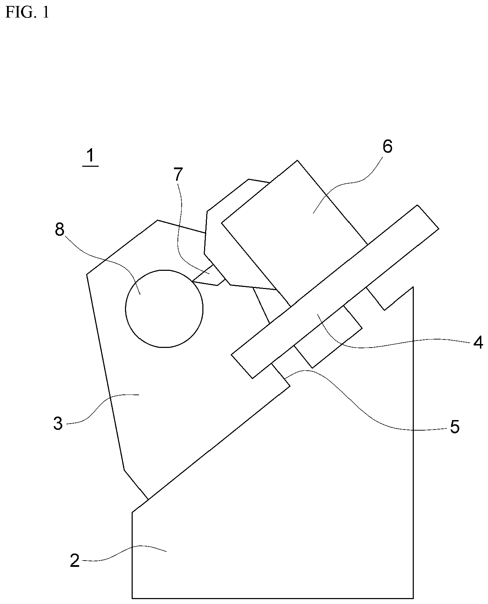

As illustrated in FIG. 1, a lathe in a machine tool 1 in the related art includes a bed 2 adjacently disposed on a ground, a main spindle 3 mounted on an upper surface of the bed 2, and a chuck mounted at a part of the main spindle 3 to grip a workpiece 8. Further, the lathe in the machine tool 1 includes a guide way 5 provided on an upper surface of the bed 2, a feed axis system 4 installed to be transferrable on the guide way 5, and a turret 6 installed on the feed axis system and fastened with a tool 7.

In general, in the machine tool 1 in the related art, particularly, the lathe, the workpiece 8 and the tool 7 mounted on the turret 6 installed on the feed axis system 4 relatively move, so that the workpiece is processed in a desired shape.

A general machine tool may have a structure, in which a part mounted with the tool is fixed, and the main spindle provided with the workpiece is transferred, and a structure, in which both the tool and the workpiece are transferred as necessary.

The feed axis system 4 of the machine tool is driven by a power train unit, more particularly, a motor. In order to more accurately control the feed axis system, the machine tool may also include an NC device as necessary.

In general, the machine tool 1, particularly, the lathe, is used for processing a circular workpiece, and the feed axis system is operated at a high speed for reducing a processing time and massively producing a workpiece. A size of the workpiece or a size of a component configuring the feed axis system is deformed by heat generated when the feed axis system is operated at a high speed, so that there is a problem in that a diameter size of the workpiece is changed.

Further, a degree of processing precision of the workpiece is decreased according to the changed diameter size of the workpiece, and when the change of the diameter size of the workpiece exceeds a permissible tolerance, an operator needs to adjust the machine tool again, which degrades productivity.

Further, in order to improve a degree of processing precision and productivity of the workpiece by thermal deformation of the feed axis system, a device for compensating for a thermal displacement error by using a temperature sensor in the related art has been partially developed, but the device does not accurately compensate for a thermal displacement of the feed axis system, which is more rapidly operated than before for improving productivity, and manufacturing cost of equipment is increased due to high-priced components, such as a sensor.

## [Disclosure]

## [Technical Problem]

The present disclosure is to solve the above problem, and aims to provide a device and method for compensating thermal displacement of feed axis system of a machine tool, which is capable of obtaining rapid traverse time densities by calculating a time ratio used for rapid traverse per unit time, being used for exchanging tools or selecting a position of the tool as a processing point, and comparing a current compensation value with a maximum value, which is calculated based on an average value of the calculated rapid traverse time densities to compensate for the feed axis system according to thermal displacement of the feed axis system, thereby being applicable to various workpieces and machine tools, promptly compensating for thermal displacement of feed axis system according to a movement of the feed axis system, and reducing manufacturing cost.

## [Technical Solution]

In order to achieve the object of the present disclosure, the present invention provides a device for compensating thermal displacement of feed axis system of a machine tool as defined in independent claim 1. Further, in the exemplary embodiment of the device for compensating thermal displacement of feed axis system of a machine tool according to the present disclosure, the device for compensating for feed axis system thermal displacement for a machine tool may further include a rapid traverse time density storing unit configured to store the rapid traverse time density calculated by the rapid traverse time density calculating unit.

The present invention also provides a method for compensating for thermal displacement of feed axis system of a machine tool as defined in independent claim 3.

**[Advantageous Effects]**

According to the device and method for compensating thermal displacement of feed axis system of a machine tool, it is possible to compensate for thermal displacement based on a rapid traverse time, more particularly, an average rapid traverse time density of the feed axis system in real time, thereby improving a degree of processing precision of a workpiece.

Further, the device and method for compensating thermal displacement of feed axis system of a machine tool is applicable to various machine tools and workpieces, thereby improving productivity of the workpiece.

Furthermore, the device and method for compensating thermal displacement of feed axis system of a machine tool does not require a high-priced configuration, such as a separate sensor, thereby reducing manufacturing cost of the machine tool.

**[Description of Drawings]**

FIG. 1 is a schematic diagram of a machine tool in the related art.

FIG. 2 is a conceptual diagram for describing concepts of a cutting transfer and a rapid traverse according to the present disclosure.

FIG. 3 is a graph representing a size variation of a workpiece according to an elapse of time.

FIG. 4 is a conceptual diagram of a thermal displacement compensating device of a machine tool according to an exemplary embodiment of the present disclosure.

FIG. 5 is a table for calculating a thermal displacement increase rate, a maximum value, and a thermal displacement decrease rate according to average rapid traverse time intensities according to the exemplary embodiment of the present disclosure.

FIGS. 6A, 6B, and 6C are graphs representing a relationship between average rapid traverse time intensities and a thermal displacement increase rate, a maximum value, and a thermal displacement decrease rate according to the exemplary embodiment of the present disclosure.

FIG. 7 is a flowchart of a method for compensating thermal displacement of a feed axis system of a machine tool according to an exemplary embodiment of the present disclosure.

**[Description of Main Reference Numerals of Drawings]**

| | |
|---|---|
| 1: Machine tool | 2: Bed |
| 3: Main spindle | 4: Feed axis system |
| 5: Guide way | 6: Turret |
| 7: Tool | 8: Workpiece |

10: Thermal displacement compensating device

20: Timer

31: Rapid traverse time measuring unit

32: Rapid traverse time density calculating unit

33: Rapid traverse time density storing unit

34: Average rapid traverse time density calculating unit

40: Reference data storing unit

(continued)

| | |
|---|---|
| 50: Control unit | 51: Compensation value calculating unit |
| 52: Maximum value calculating unit | |
| 53: Thermal displacement increase rate calculating unit | |
| 54: Thermal displacement decrease rate calculating unit | |
| 55: Comparing unit | |
| 100: Chuck | 110: Workpiece |
| 120: Tool | 130: Turret |
| 140, 150: Cutting transfer | 160, 170: Rapid traverse |

**[Best Mode]**

Hereinafter, an exemplary embodiment of the present disclosure will be described in detail with reference to the accompanying drawings. First of all, in giving reference numer-als to elements of each drawing, like reference numerals refer to like elements.

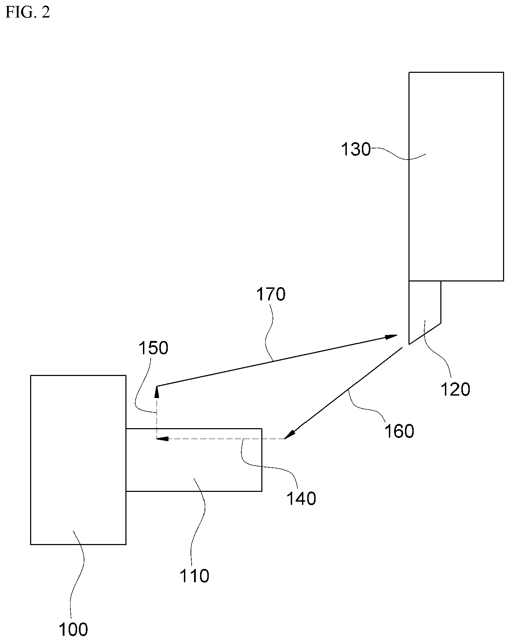

FIG. 2 is a conceptual diagram for describing concepts of a cutting transfer and a rapid traverse according to the present disclosure. As illustrated in FIG. 2, an operation of a feed axis system, particularly, a lathe feed axis system, is divided into cutting transfers 140 and 150 actually cutting, by a tool 120 mounted on a turret 130, a workpiece 110 mounted on a chuck 100, and rapid traverses 160 and 170 exchanging the tool 120 or selecting a position of the tool 120. In general, the cutting transfers 140 and 150 are performed at a low speed of several hundreds of mm per minute, so that a heat generation amount of the feed axis system is not large. By contrast, the rapid traverses 160 and 170 are performed at a maximum speed of several tens of m per minute to occupy most of heat generation quantities of the feed axis system. Accordingly, an element influencing an increase or a decrease in a diameter of the workpiece according to thermal displacement of the workpiece 110 according to thermal displacement of the feed axis system is the rapid traverses 160 and 170.

In a device and method for compensating thermal displacement of feed axis system of a machine tool according to an exemplary embodiment of the present disclosure, a rapid traverse time means a time consumed for a rapid traverse. Further, a rapid traverse time density means a time ratio (Equation (1) below) used for the rapid traverse per unit time

Equation (1)

$$\text{Rapid traverse time density} = \text{rapid traverse time/unit time}$$

For example, when a rapid traverse time for 60 seconds is six seconds, a rapid traverse density is 10%.

A rapid traverse time density may be varied according to the kind of machine tool, a form, a kind, and a processing state of workpiece. Accordingly, according to the exemplary embodiment of the present disclosure, a rapid traverse time density is calculated a predetermined number of times in order to accurately calculate a rapid traverse time density, and heat displacement of the feed axis system is compensated based on an average of the rapid traverse time density, that is, an average rapid traverse time density. The average rapid traverse time density is generally calculated by dividing a value obtained by measuring a rapid traverse time density 10 times by 10 (Equation (2)).

Equation (2)

$$\text{Average rapid traverse time density} = \text{sum of rapid traverse time density 10 times/10}$$

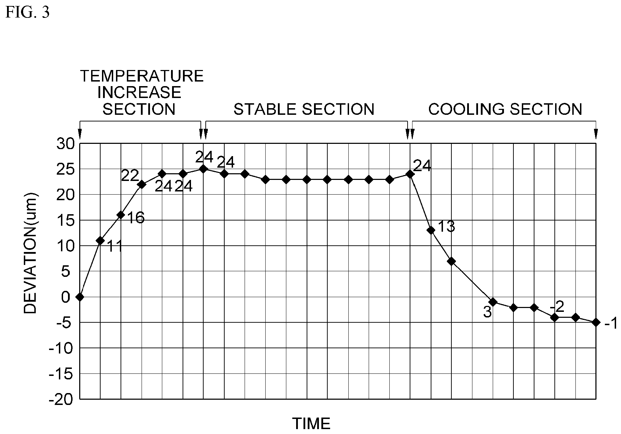

FIG. 3 is a graph representing a size variation of a workpiece according to an elapse of time. As illustrated in FIG. 3, an initial stage, at which the machine tool is operated, represents a temperature increase section, in which a size of the workpiece is increased. In this case, frictional heat generated in the feed axis system is increased at an initial stage of the operation of the machine tool, a temperature of the feed axis system itself is increased according to the increase of the frictional heat, and a size of the workpiece is increased by the heat received through the feed axis system. At a middle stage of the operation of the machine tool, the frictional heat generated in the feed axis system reaches a saturation state, and a temperature of the feed axis system is uniformly maintained from this time. Accordingly, a stable section, in which the size of the workpiece is uniformly maintained, is represented. When the operation of the machine tool is stopped, the heat generated in the feed axis system is discharged to the outside, so that the feed axis system is cooled, and thus a cooling section, in which the size of the workpiece is decreased, is represented.

In the exemplary embodiment of the device and method for compensating thermal displacement of feed axis system of a machine tool according to the present disclosure, a thermal displacement increase rate means a thermal displacement increase rate when the machine tool starts to be operated in a state where the machine tool is completely cooled. The thermal displacement increase rate may be expressed with a change in a diameter size of the workpiece per unit time. A maximum value means a maximum thermal displacement value represented when a temperature increase is stopped and a temperature of the machine tool is stabilized. A thermal displacement decrease rate means a rate of a decrease of thermal displacement when an operation of the machine tool is stopped.

Reference data for a thermal displacement increase rate, a maximum value, and a thermal displacement decrease rate by the temperature increase section, the stable section, and the cooling section may be determined through an experiment.

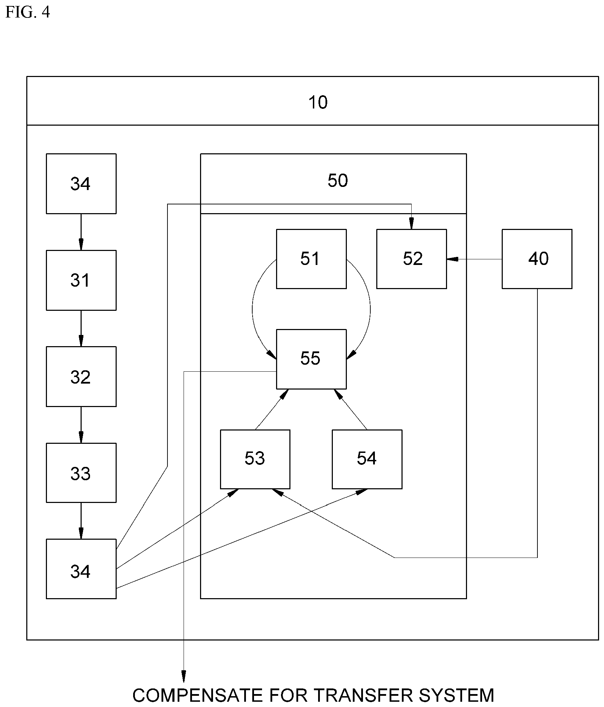

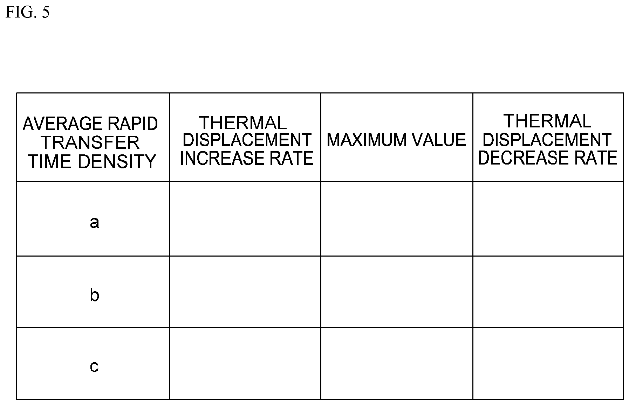

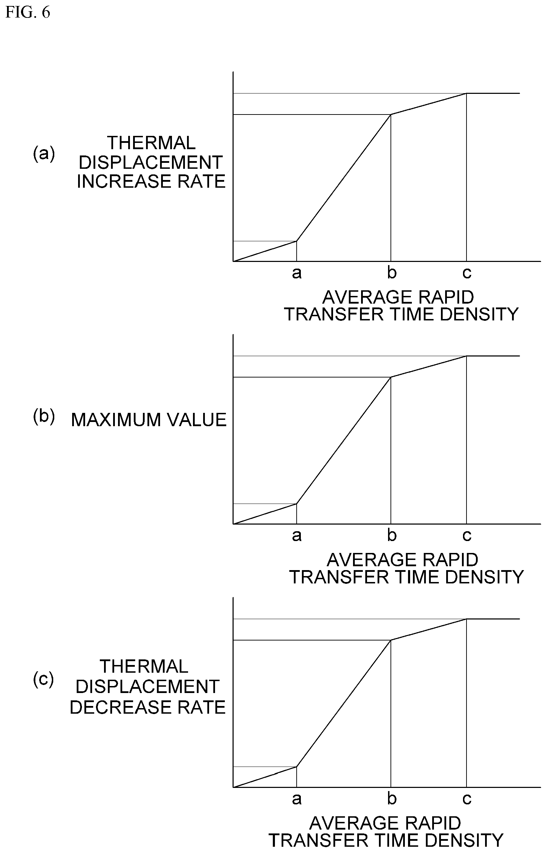

FIG. 4 is a conceptual diagram of a thermal displacement compensating device 10 of a machine tool according to an exemplary embodiment of the present disclosure, and FIG. 5 is a table for calculating a thermal displacement increase rate, a maximum value, and a thermal displacement decrease rate according to average rapid traverse time intensities according to the exemplary embodiment of the present disclosure. FIGS. 6A, 6B, and 6C are graphs representing a relationship between average rapid traverse time intensities and a thermal displacement increase rate, a maximum value, and a thermal displacement decrease rate according to the exemplary embodiment of the present disclosure.

The thermal displacement compensating device 10 of a machine tool according to the present disclosure will be described with reference to FIGS. 4 to 6. The thermal displacement compensating device 10 of a machine tool according to the present disclosure includes a timer 20, a rapid traverse time measuring unit 31, a rapid traverse time density calculating unit 32, an average rapid traverse time density calculating unit 34, a reference data storing unit 40, and a control unit 50.

Although not essentially limited thereto, the thermal displacement compensating device 10 for a machine tool according to the exemplary embodiment of the present disclosure includes the aforementioned bed 2, main spindle 3, feed axis system 4, and power train unit.

When the feed axis system 4 is transferred, the timer 20 is operated for a predetermined time. Although not essentially limited thereto, according to the exemplary embodiment of the present disclosure, the timer is operated for 60 seconds after the feed axis system starts to be transferred.

The rapid traverse time measuring unit 31 measures a rapid traverse time of the feed axis system 4 while the timer 20 is operated. As described above, the rapid traverse time means a transfer time of the feed axis system used for exchanging a tool or selecting a position of a tool as a processing point.

The rapid traverse time density calculating unit 32 calculates a rapid traverse time density per unit time by using a rapid traverse time measured by the rapid traverse time measuring unit 31. Although not essentially limited thereto, according to the exemplary embodiment of the present disclosure, a unit time of the rapid traverse time density calculating unit 32 may be set to 60 seconds, so that the rapid traverse time density may be calculated. That is, the rapid traverse time density calculating unit 32 calculates a rapid traverse time density through aforementioned Equation (1).

According to another exemplary embodiment of the present disclosure, a thermal displacement compensating device 10 of a machine may additionally include a rapid traverse time density storing unit 33 storing a rapid traverse time density calculated by the rapid traverse time density calculating unit 32.

The average rapid traverse time density calculating unit 34 calculates an average rapid traverse time density based on the rapid traverse time density stored in the rapid traverse time density storing unit 33. Although not essentially limited thereto, the average rapid traverse time density calculating unit 34 according to the exemplary embodiment of the present disclosure calculates the rapid traverse time density stored in the rapid traverse time density storing unit 33 based on ten times. That is, the average rapid traverse time density calculating unit 34 calculates an average rapid traverse time density through aforementioned Equation (2).

A temperature increase section, a stable section, and a cooling section illustrated in the graph of FIG. 2 are calculated for various machine tools and workpieces through an experiment, and reference data of a thermal displacement increase rate, a maximum value, and a thermal displacement decrease rate is stored in the reference data storing unit 40 based on the calculated sections.

As illustrated in FIG. 4, according to another exemplary embodiment of the present disclosure, the control unit 50 includes a compensation value calculating unit 51, a maximum value calculating unit 52, a thermal displacement increase rate calculating unit 53, a thermal displacement decrease rate calculating unit 54, and a comparing unit 55.

The compensation value calculating unit 51 calculates a current compensation value. According to the exemplary embodiment of the present disclosure, a current compensation value is calculated by predetermined data according to the kind of machine tool and the form and the kind of workpiece.

The maximum value calculating unit 52 calculates a maximum value based on the average rapid traverse time density calculated by the average rapid traverse time density calculating unit 34 and the maximum value data stored in

# EP 2 946 877 B1

the reference data storing unit 40.

The thermal displacement increase rate calculating unit 53 calculates a thermal displacement increase rate based on the average rapid traverse time density calculated by the average rapid traverse time density calculating unit 34 and the thermal displacement increase rate data stored in the reference data storing unit 40.

The thermal displacement decrease rate calculating unit 54 calculates a thermal displacement decrease rate based on the average rapid traverse time density calculated by the average rapid traverse time density calculating unit 34 and the thermal displacement decrease rate data stored in the reference data storing unit 40.

As represented in the table of FIG. 5, a thermal displacement increase rate, a maximum value, and a thermal displacement decrease rate according to a corresponding average rapid traverse time density are calculated based on the average rapid traverse time density calculated by the average rapid traverse time density calculating unit 34 and the thermal displacement increase rate, the maximum value, and the thermal displacement decrease rate calculated by the experiment as illustrated in FIG. 3 and stored in the reference data storing unit 40.

The thermal displacement increase rate, the maximum value, and the thermal displacement decrease rate for a value between sections of the average rapid traverse time density may be obtained by using a linear interpolation method.

The comparing unit 55 compares the current compensation value calculated by the compensation value calculating unit 51 and the maximum value calculated by the maximum value calculating unit 52.

When the current compensation value is larger than the maximum value as a result of the comparison by the comparing unit 55, the feed axis system is compensated based on the thermal displacement decrease rate calculated by the thermal displacement decrease rate calculating unit 54.

When the current compensation value is smaller than the maximum value as a result of the comparison by the comparing unit 55, the feed axis system is compensated based on the thermal displacement increase rate calculated by the thermal displacement increase rate calculating unit 53.

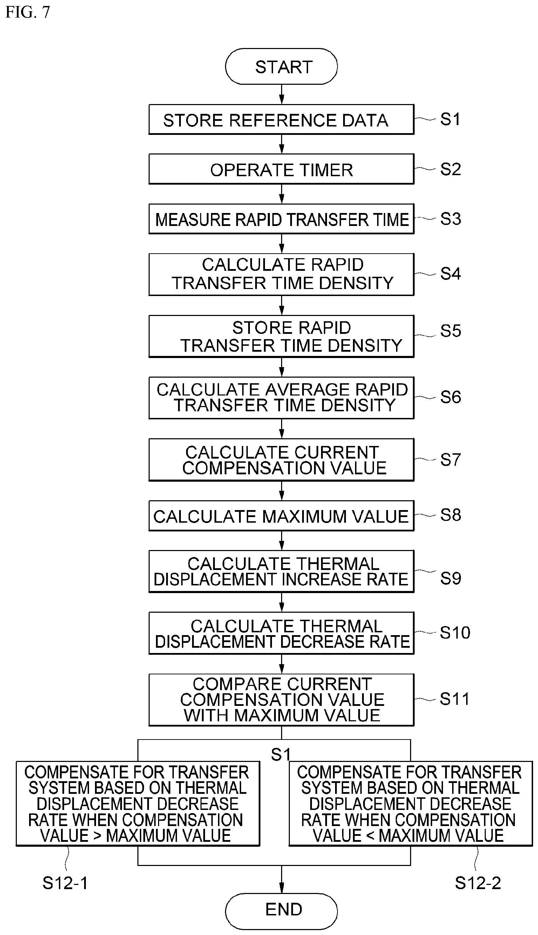

FIG. 7 is a flowchart of a method for compensating thermal displacement of feed axis system of a machine tool according to another exemplary embodiment of the present disclosure.

The method for compensating thermal displacement of feed axis system of a machine tool according to the present disclosure will be described with reference to FIG. 7. The method for compensating thermal displacement of feed axis system of machine tool according to the present disclosure includes storing reference data (S1), operating the timer (S2), measuring a rapid traverse time (S3), calculating a rapid traverse time density (S4), calculating an average rapid traverse time density (S6), calculating a current compensation value (S7), calculating a maximum value (S8), calculating a thermal displacement increase rate (S9), calculating a thermal displacement decrease rate (S10), and comparing the current compensation value with the maximum value (S11).

As illustrated in FIG. 3, reference data of the thermal displacement increase rate, the thermal displacement decrease rate, and the maximum value based on experimental values according to the various kinds of a machine tool and the kind of workpiece are stored in the reference data storing unit 40.

After the storing reference data (S1), when the feed axis system 4 is transferred, the timer 20 is operated for a predetermined time. According to the exemplary embodiment of the method for compensating thermal displacement of feed axis system of a machine tool according to the present disclosure, the timer is operated for 60 seconds.

After the operating the timer (S2), the rapid traverse time measuring unit 31 measures a rapid traverse time of the feed axis system 4 for an operation time of the timer 20.

After the measuring the rapid traverse time (S3), the rapid traverse time calculating unit 32 calculates a rapid traverse time density that is a rapid traverse time per unit time based on the measured rapid traverse time. According to the exemplary embodiment of the method for compensating thermal displacement of feed axis system of a machine tool according to the present disclosure, the rapid traverse time density in the calculating the rapid traverse time density(S4) is calculated by aforementioned Equation (1).

After the calculating the rapid traverse time density (S4), the average rapid traverse time density calculating unit 34 calculates an average rapid traverse time density based on the rapid traverse time density. According to the exemplary embodiment of the method for compensating thermal displacement of a feed axis system of a machine tool according to the present disclosure, the average rapid traverse time density is calculated by the aforementioned Equation (2).

After the calculating the average rapid traverse time density (S6), the compensation value calculating unit 51 calculates a current compensation value based on the stored data.

After the calculating the current compensation value (S7), a maximum value is calculated based on the average rapid traverse time density calculated by the average rapid traverse time density calculating unit 33 and the maximum value data stored in the reference data storing unit 40.

After the calculating the maximum value (S8), a thermal displacement increase rate is calculated based on the average rapid traverse time density calculated by the average rapid traverse time density calculating unit 33 and the thermal displacement increase rate data stored in the reference data storing unit 40.

6

After the calculating the thermal displacement increase rate (S9), a thermal displacement decrease rate is calculated based on the average rapid traverse time density calculated by the average rapid traverse time density calculating unit 33 and the thermal displacement decrease rate data stored in the reference data storing unit 40.

After the calculating the thermal displacement decrease rate (S10), the current compensation value calculated by the compensation value calculating unit 51 is compared with the maximum value calculated by the maximum value calculating unit 52.

As illustrated in FIG. 7, according to the exemplary embodiment of the method for compensating thermal displacement of a feed axis system of a machine tool according to the present disclosure, the current compensation value is compared with the maximum value, and when the current compensation value is larger than the maximum value, the feed axis system 4 is compensated based on the thermal displacement decrease rate (SI2-1).

When the current compensation value is smaller than the maximum value, the feed axis system 4 is compensated based on the thermal displacement increase rate (S12-2).

As described above, the device and method for compensating thermal displacement of feed axis system of a machine tool according to the present disclosure compensates for the feed axis system considering a heat generation amount according to the transfer of the feed axis system by using an average rapid traverse time density based on a rapid traverse time density of the feed axis system, thereby improving a degree of processing precision of a workpiece and generally reducing manufacturing cost of a machine tool.

The aforementioned contents are mainly described based on the lathe machine tool, but the present disclosure is not essentially limited thereto, and is applicable to another machine tool.

Further, the present disclosure is not limited to a modification example illustrated in the drawing and the aforementioned exemplary embodiments, and may be expanded to another exemplary embodiment belonging to the scope of the accompanying claims.

**[Industrial Applicability]**

The present disclosure relates to a device and method for compensating thermal displacement of feed axis system of a machine tool, which obtains rapid traverse time density by calculating a time ratio used for rapid traverse per unit time, being used for exchanging tools or selecting a position of the tool as a processing point, and compares a current compensation value with a maximum value, which is calculated based on an average value of the calculated rapid traverse time density to compensate for the feed axis system according to thermal displacement of the feed axis system.

**Claims**

1. A device for compensating thermal displacement of feed axis system of a machine tool, which comprises a bed (2), a main spindle (3) mounted on the bed (2), a feed axis system (4) movably installed on the bed (2), and a power train unit configured to transmit power transferring the feed axis system (4), the device comprising: a timer (20) operated for a predetermined time when the feed axis system (4) is transferred;

   a rapid traverse time measuring unit (31) configured to measure a rapid traverse time of the feed axis system (4) while the timer (20) is operated;

   a rapid traverse time density calculating unit (32) configured to calculate a rapid traverse time density per unit time by using the rapid traverse time measured by the rapid traverse time measuring unit (31);

   an average rapid traverse time density calculating unit (34) configured to calculate an average rapid traverse time density based on the rapid traverse time density;

   a reference data storing unit (40) configured to store a thermal displacement increase rate, a thermal displacement decrease rate, and a maximum value; and

   a control unit (50), wherein the control unit (50) includes:

      a compensation value calculating unit (51) configured to calculate a current compensation value;

      a maximum value calculating unit (52) configured to calculate a maximum value based on the average rapid traverse time density calculated by the average rapid traverse time density calculating unit (34) and the maximum value data stored in the reference data storing unit (40);

      a thermal displacement increase rate calculating unit (53) configured to calculate a thermal displacement increase rate based on the average rapid traverse time density calculated by the average rapid traverse time density calculating unit (34) and the thermal displacement increase rate data stored in the reference data storing unit (40);

      a thermal displacement decrease rate calculating unit (54) configured to calculate a thermal displacement decrease rate based on the average rapid traverse time density calculated by the average rapid traverse time density calculating unit (34) and the thermal displacement decrease rate data stored in the reference data storing unit (40); and

a comparing unit (55) configured to compare the current compensation value calculated by the compensation value calculating unit (51) with the maximum value calculated by the maximum value calculating unit(52), and when the current compensation value is larger than the maximum value, the feed axis system (4) is compensated based on the thermal displacement decrease rate, and

when the current compensation value is smaller than the maximum value, the feed axis system (4) is compensated based on the thermal displacement increase rate.

2. The device of claim 1, further comprising:
a rapid traverse time density storing unit (33) configured to store the rapid traverse time density calculated by the rapid traverse time density calculating unit (32).

3. A method for compensating thermal displacement of feed axis system of a machine tool, comprising: storing reference data of a thermal displacement increase rate, a thermal displacement decrease rate, and a maximum value (S1);
operating a timer for a predetermined time when a feed axis system (4) is transferred (S2);
measuring a rapid traverse time of the feed axis system (4) while the timer (20) is operated (S3);
calculating a rapid traverse time density per unit time based on the measured rapid traverse time (S4);
calculating an average rapid traverse time density (S6);
calculating a current compensation value (S7);
calculating a maximum value based on the average rapid traverse time density and the maximum value data (S8);
calculating a thermal displacement increase rate based on the average rapid traverse time density and the thermal displacement increase rate data (S9);
calculating a thermal displacement decrease rate based on the average rapid traverse time density and the thermal displacement decrease rate data (S10); and
comparing the current compensation value with the maximum value (S11)
after the comparing the current compensation value with the maximum value(S11),
compensating for the feed axis system (4) based on the thermal displacement decrease rate when the current compensation value is larger than the maximum value (S12-1); and
compensating for the feed axis system (4) based on the thermal displacement increase rate when the current compensation value is smaller than the maximum value (12-2).

**Patentansprüche**

1. Vorrichtung zum Ausgleichen der Wärmeverschiebung des Vorschubachsensystems eines Maschinenwerkzeugs, die ein Bett (2), eine auf dem Bett (2) montierte Hauptspindel (3), ein auf dem Bett (2) beweglich installiertes Vorschubachsensystem (4) und eine Antriebsstrangeinheit, die dazu ausgelegt ist, für das Verbringen des Vorschubachsensystems (4) Energie zu übertragen, umfasst, wobei die Vorrichtung Folgendes umfasst:

einen Timer (20), der für einen festgelegten Zeitraum betrieben wird, wenn das Vorschubachsensystem (4) verbracht wird;
eine Eilgangzeitmesseinheit (31), die dazu ausgelegt ist, eine Eilgangzeit des Zufuhrachsensystems (4) zu messen, wenn der Timer (20) betrieben wird;
eine Eilgangzeitdichteberechnungseinheit (32), die dazu ausgelegt ist, eine Eilgangzeitdichte pro Zeiteinheit zu berechnen, indem die von der Eilgangzeitmesseinheit (31) gemessene Eilgangzeit verwendet wird;
eine Durchschnittseilgangzeitdichteberechnungseinheit (34), die dazu ausgelegt ist, eine Durchschnittseilgangzeitdichte aufgrund der Eilgangzeitdichte zu berechnen;
eine Bezugsdatenspeichereinheit (40), die dazu ausgelegt ist, eine Wärmeverschiebungszunahmegeschwindigkeit, eine Wärmeverschiebungsabnahmegeschwindigkeit und einen Maximalwert zu speichern; und
eine Steuereinheit (50), wobei die Steuereinheit (50) Folgendes enthält:

eine Ausgleichswertberechnungseinheit (51), die dazu ausgelegt ist, einen aktuellen Ausgleichswert zu berechnen;
eine Maximalwertberechnungseinheit (52), die dazu ausgelegt ist, einen Maximalwert auf Grundlage der von der Durchschnittseilgangzeitdichteberechnungseinheit (34) berechneten Durchschnittseilgangzeitdichte und des in der Bezugsdatenspeichereinheit (40) gespeicherten Maximalwerts zu berechnen;

eine Wärmeverschiebungszunahmegeschwindigkeitsberechnungseinheit (53), die dazu ausgelegt ist, eine Wärmeverschiebungszunahmegeschwindigkeit auf Grundlage der durch die Durchschnittseilgangzeitdichteberechnungseinheit (34) berechnete Durchschnittseilgangzeitdichte und der in der Bezugsdatenspeichereinheit (40) gespeicherten Wärmeverschiebungszunahmegeschwindigkeit zu berechnen;

eine Wärmeverschiebungsabnahmegeschwindigkeitsberechnungseinheit (54), die dazu ausgelegt ist, eine Wärmeverschiebungsabnahmegeschwindigkeit auf Grundlage der durch die Durchschnittseilgangzeitdichteberechnungseinheit (34) berechnete Durchschnittseilgangzeitdichte und der in der Bezugsdatenspeichereinheit (40) gespeicherten Wärmeverschiebungsabnahmegeschwindigkeit zu berechnen; und

eine Vergleichseinheit (55), die dazu ausgelegt ist, den von der Ausgleichswertberechnungseinheit (51) berechneten aktuellen Ausgleichswert mit dem von der Maximalwertberechnungseinheit (52) berechneten Maximalwert zu vergleichen, und

wobei, wenn der aktuelle Ausgleichswert größer als der Maximalwert ist, das Vorschubachsensystem (4) auf Grundlage der Wärmeverschiebungsabnahmegeschwindigkeit ausgeglichen wird, und

wobei, wenn der aktuelle Ausgleichswert kleiner als der Maximalwert ist, das Vorschubachsensystem (4) auf Grundlage der Wärmeverschiebungszunahmegeschwindigkeit ausgeglichen wird.

2. Vorrichtung nach Anspruch 1, ferner Folgendes umfassend: eine Eilgangzeitdichtespeichereinheit (33), die dazu ausgelegt ist, die von der Eilgangzeitdichteberechnungseinheit (32) berechnete Eilgangzeitdichte zu speichern.

3. Verfahren zum Ausgleichen der Wärmeverschiebung des Vorschubachsensystems eines Maschinenwerkzeugs, Folgendes umfassend:

Speichern von Bezugsdaten einer Wärmeverschiebungszunahmegeschwindigkeit, einer Wärmeverschiebungsabnahmegeschwindigkeit und eines Maximalwerts (S1);

Betreiben eines Timers für eine festgelegte Zeit, wenn ein Vorschubachsensystem (4) verbracht wird (S2);

Messen einer Eilgangzeit des Vorschubachsensystems (4), während der Timer (20) betrieben wird (S3);

Berechnen einer Eilgangzeitdichte pro Zeiteinheit auf Grundlage der gemessenen Eilgangzeit (S4);

Berechnen einer Durchschnittseilgangzeitdichte (S6);

Berechnen eines aktuellen Ausgleichswerts (S7);

Berechnen eines Maximalwerts auf Grundlage der Durchschnittseilgangzeitdichte und Maximalwertdaten (S8);

Berechnen einer Wärmeverschiebungszunahmegeschwindigkeit auf Grundlage der Durchschnittseilgangzeitdichte und Wärmeverschiebungszunahmegeschwindigkeitsdaten (S9);

Berechnen einer Wärmeverschiebungsabnahmegeschwindigkeit auf Grundlage der Durchschnittseilgangzeitdichte und Wärmeverschiebungsabnahmegeschwindigkeitsdaten (S10); und

Vergleichen des aktuellen Ausgleichswerts mit dem Maximalwert (S11),

nach dem Vergleichen des aktuellen Ausgleichswerts mit dem Maximalwert (S11)

Ausgleichen des Vorschubachsensystems (4) auf Grundlage der Wärmeverschiebungsabnahmegeschwindigkeit, wenn der aktuelle Ausgleichswert größer als der Maximalwert ist (S12-1); und

Ausgleichen des Vorschubachsensystems (4) auf Grundlage der Wärmeverschiebungszunahmegeschwindigkeit, wenn der aktuelle Ausgleichswert kleiner als der Maximalwert ist (12-2).

## Revendications

1. Dispositif de compensation de déplacement thermique de système d'axe d'avance d'une machine-outil, qui comprend un banc (2), une broche principale (3) montée sur le banc (2), un système d'axe d'avance (4) installé de manière mobile sur le banc (2), et une unité de transmission de puissance conçue pour transmettre de la puissance déplaçant le système d'axe d'avance (4), le dispositif comprenant :

une minuterie (20) fonctionnant pendant une durée prédéfinie lorsque le système d'axe d'avance (4) est déplacé ;

une unité de mesure de temps de traversée rapide (31) conçue pour mesurer un temps de traversée rapide du système d'axe d'avance (4) pendant que la minuterie (20) fonctionne ;

une unité de calcul de densité de temps de traversée rapide (32) conçue pour calculer une densité de temps de traversée rapide par unité de temps à l'aide du temps de traversée rapide mesuré par l'unité de mesure de temps de traversée rapide (31) ;

une unité de calcul de densité moyenne de temps de traversée rapide (34) conçue pour calculer une densité moyenne de temps de traversée rapide sur la base de la densité de temps de traversée rapide ;

une unité de stockage de données de référence (40) conçue pour stocker une vitesse d'augmentation de déplacement thermique, une vitesse de diminution de déplacement thermique et une valeur maximale ; et une unité de commande (50), l'unité de commande (50) comprenant :

une unité de calcul de valeur de compensation (51) conçue pour calculer une valeur de compensation actuelle ;

une unité de calcul de valeur maximale (52) conçue pour calculer une valeur maximale sur la base de la densité moyenne de temps de traversée rapide calculée par l'unité de calcul de densité moyenne de temps de traversée rapide (34) et des données de valeur maximale stockées dans l'unité de stockage de données de référence (40) ;

une unité de calcul de vitesse d'augmentation de déplacement thermique (53) conçue pour calculer une vitesse d'augmentation de déplacement thermique sur la base de la densité moyenne de temps de traversée rapide calculée par l'unité de calcul de densité moyenne de temps de traversée rapide (34) et des données de vitesse d'augmentation de déplacement thermique stockées dans l'unité de stockage de données de référence (40) ;

une unité de calcul de vitesse de diminution de déplacement thermique (54) conçue pour calculer une vitesse de diminution de déplacement thermique sur la base de la densité moyenne de temps de traversée rapide calculée par l'unité de calcul de densité moyenne de temps de traversée rapide (34) et des données de vitesse de diminution de déplacement thermique stockées dans l'unité de stockage de données de référence (40) ; et

une unité de comparaison (55) conçue pour comparer la valeur de compensation actuelle calculée par l'unité de calcul de valeur de compensation (51) à la valeur maximale calculée par l'unité de calcul de valeur maximale (52), et

lorsque la valeur de compensation actuelle est supérieure à la valeur maximale, le système d'axe d'avance (4) étant compensé sur la base de la vitesse de diminution de déplacement thermique, et

lorsque la valeur de compensation actuelle est inférieure à la valeur maximale, le système d'axe d'avance (4) étant compensé sur la base de la vitesse d'augmentation de déplacement thermique.

2. Dispositif selon la revendication 1, comprenant en outre : une unité de stockage de densité de temps de traversée rapide (33) conçue pour stocker la densité de temps de traversée rapide calculée par l'unité de calcul de densité de temps de traversée rapide (32).

3. Procédé pour compenser le déplacement thermique d'un système d'axe d'avance d'une machine-outil, comprenant les étapes consistant à :

stocker les données de référence d'une vitesse d'augmentation de déplacement thermique, d'une vitesse de diminution de déplacement thermique, et d'une valeur maximale (S1) ;

faire fonctionner une minuterie pendant une durée prédéfinie lorsqu'un système d'axe d'avance (4) est déplacé (S2) ;

mesurer un temps de traversée rapide du système d'axe d'avance (4) pendant que la minuterie (20) fonctionne (S3) ;

calculer une densité de temps de traversée rapide par unité de temps sur la base du temps de traversée rapide mesuré (S4) ;

calculer une densité moyenne de temps de traversée rapide (S6) ; calculer une valeur de compensation actuelle (S7) ;

calculer une valeur maximale sur la base de la densité moyenne de temps de traversée rapide et des données de valeur maximale (S8) ;

calculer une vitesse d'augmentation de déplacement thermique sur la base de la densité moyenne de temps de traversée rapide et des données de vitesse d'augmentation de déplacement thermique (S9) ;

calculer une vitesse de diminution de déplacement thermique sur la base de la densité moyenne de temps de traversée rapide et des données de vitesse de diminution de déplacement thermique (S10) ; et

comparer la valeur de compensation actuelle à la valeur maximale (S11) après la comparaison de la valeur de compensation actuelle à la valeur maximale (S11),

compenser le système d'axe d'avance (4) sur la base de la vitesse de diminution de déplacement thermique lorsque la valeur de compensation actuelle est supérieure à la valeur maximale (S12-1) ; et

compenser le système d'axe d'avance (4) sur la base de la vitesse d'augmentation de déplacement thermique lorsque la valeur de compensation actuelle est inférieure à la valeur maximale (12-2).

FIG. 1

EP 2 946 877 B1

FIG. 2

12

FIG. 3

FIG. 4

COMPENSATE FOR TRANSFER SYSTEM

FIG. 5

| AVERAGE RAPID TRANSFER TIME DENSITY | THERMAL DISPLACEMENT INCREASE RATE | MAXIMUM VALUE | THERMAL DISPLACEMENT DECREASE RATE |
|---|---|---|---|
| a | | | |
| b | | | |
| c | | | |

FIG. 6

(a) THERMAL DISPLACEMENT INCREASE RATE

AVERAGE RAPID TRANSFER TIME DENSITY

(b) MAXIMUM VALUE

AVERAGE RAPID TRANSFER TIME DENSITY

(c) THERMAL DISPLACEMENT DECREASE RATE

AVERAGE RAPID TRANSFER TIME DENSITY

FIG. 7

```
                    ┌──────────────┐
                    │    START     │
                    └──────┬───────┘
                           ▼
         ┌─────────────────────────────────┐
         │      STORE REFERENCE DATA        │── S1
         └──────────────┬──────────────────┘
                        ▼
         ┌─────────────────────────────────┐
         │         OPERATE TIMER            │── S2
         └──────────────┬──────────────────┘
                        ▼
         ┌─────────────────────────────────┐
         │   MEASURE RAPID TRANSFER TIME    │── S3
         └──────────────┬──────────────────┘
                        ▼
         ┌─────────────────────────────────┐
         │       CALCULATE RAPID            │── S4
         │   TRANSFER TIME DENSITY          │
         └──────────────┬──────────────────┘
                        ▼
         ┌─────────────────────────────────┐
         │         STORE RAPID              │── S5
         │    TRANSFER TIME DENSITY         │
         └──────────────┬──────────────────┘
                        ▼
         ┌─────────────────────────────────┐
         │  CALCULATE AVERAGE RAPID         │── S6
         │    TRANSFER TIME DENSITY         │
         └──────────────┬──────────────────┘
                        ▼
         ┌─────────────────────────────────┐
         │      CALCULATE CURRENT           │── S7
         │     COMPENSATION VALUE           │
         └──────────────┬──────────────────┘
                        ▼
         ┌─────────────────────────────────┐
         │    CALCULATE MAXIMUM VALUE       │── S8
         └──────────────┬──────────────────┘
                        ▼
         ┌─────────────────────────────────┐
         │      CALCULATE THERMAL           │── S9
         │  DISPLACEMENT INCREASE RATE      │
         └──────────────┬──────────────────┘
                        ▼
         ┌─────────────────────────────────┐
         │      CALCULATE THERMAL           │── S10
         │  DISPLACEMENT DECREASE RATE      │
         └──────────────┬──────────────────┘
                        ▼
         ┌─────────────────────────────────┐
         │     COMPARE CURRENT              │── S11
         │    COMPENSATION VALUE            │
         │    WITH MAXIMUM VALUE            │
         └──────────────┬──────────────────┘
```

S1

COMPENSATE FOR TRANSFER SYSTEM BASED ON THERMAL DISPLACEMENT DECREASE RATE WHEN COMPENSATION VALUE > MAXIMUM VALUE

S12-1

COMPENSATE FOR TRANSFER SYSTEM BASED ON THERMAL DISPLACEMENT DECREASE RATE WHEN COMPENSATION VALUE < MAXIMUM VALUE

S12-2

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012123586 A1
- US 4853867 A